# EUROPEAN PATENT APPLICATION

(11) **EP 3 725 604 A1**
(43) Date of publication of application: **21.10.2020**
(21) Application number: 18887743.5
(22) Date of filing: 05.11.2018
(51) Int. Cl.: B60S 5/06

(54) **ELECTRIC POWER CONTROL METHOD AND SYSTEM FOR USE IN CHANGING VEHICLE BATTERY**

(30) Priority: 15.12.2017 CN 201711353809; 26.10.2018 CN 201811260617
(71) Applicant: Nio Nextev Limited, Hong Kong (CN)
(72) Inventor: FU, Litao, Hong Kong (CN); LI, Bo, Hong Kong (CN); SHEN, Qizhuang, Hong Kong (CN); SUN, Yongchao, Hong Kong (CN); LIANG, Chao, Hong Kong (CN)
(74) Representative: Patentwerk B.V.
(86) International application number: PCT/CN2018/113919
(87) International publication number: WO 2019/114460

(57) **Abstract**

Provided in the invention is an electric power control method for vehicle battery swapping, the method comprising: S1, sending, to a vehicle with a battery to be swapped, a high-voltage turn-off signal for turning off high voltages; S2, stopping, by the vehicle with a battery to be swapped once receiving the high-voltage turn-off signal, supplying power to high-voltage demand devices in the vehicle, and causing the vehicle to enter a safety mode in which high-voltage power supply of the vehicle is prohibited from being turned on; and S3, performing a battery swap operation after the vehicle enters the safety mode. Further provided is a corresponding system.

## Description

### Technical Field

The invention belongs to the field of automobiles, and more specifically, relates to electric power control for vehicle battery swapping.

### Background Art

Electric vehicles are the trend of green travel in the future. As far as the rang provided per charge is concerned, currently it is mainly about the charging of batteries. However, the battery swapping function has been constantly mentioned and implemented in the past year, and as everyone has noticed, battery swapping is a powerful supplementary way of charging.

In this way, how to ensure correct battery swapping and how to deal with high-voltage power in a vehicle during the process of battery swapping are problems that the industry cares about and is committed to solving.

### Summary of the Invention

The invention provides an electric power control method for vehicle battery swapping. The method comprises: S1, sending, to a vehicle with a battery to be swapped, a high-voltage turn-off signal for turning off high voltages; S2, stopping, by the vehicle with a battery to be swapped once receiving the high-voltage turn-off signal, supplying power to high-voltage demand devices in the vehicle, and causing the vehicle to enter a safety mode in which high-voltage power supply of the vehicle is prohibited from being turned on (including two forms of remote and local turn-on); and S3, performing a battery swap operation after the vehicle enters the safety mode.

In the electric power control method for vehicle battery swapping as provided, alternatively, step S 1 occurs after it is determined that the vehicle with a battery to be swapped is at a battery swap platform.

The electric power control method for vehicle battery swapping as provided may further comprise: confirming, before the vehicle with a battery to be swapped stops supplying power to the high-voltage demand devices in the vehicle, whether the vehicle with a battery to be swapped has been locked, and stopping supplying power to the high-voltage demand devices in the vehicle only when the vehicle has been locked.

The electric power control method for vehicle battery swapping as provided may further comprise: confirming, before performing the battery swap operation, that a communication network of the vehicle with a battery to be swapped enters a sleep mode.

The electric power control method for vehicle battery swapping as provided may further comprise: determining, before step S1, whether the vehicle with a battery to be swapped meets a preset condition for battery swapping, wherein the preset condition at least comprises a small-battery charge level of the vehicle with a battery to be swapped meeting the battery swap condition sufficient to support the operating of each low-voltage electric control unit in the vehicle during the process of battery swapping.

The electric power control method for vehicle battery swapping as provided may further comprise: turning off a remote high-voltage power-on function and/or a remote software upgrade function of the vehicle before the vehicle with a battery to be swapped stops supplying power to the high-voltage demand devices in the vehicle.

The electric power control method for vehicle battery swapping as provided may further comprise: turning off any one or a combination of the following functions of the vehicle before the vehicle with a battery to be swapped stops supplying power to the high-voltage demand devices in the vehicle: a creep torque of the vehicle, a low-small-battery-charge-level wake-up charging function, and a request from an electric control unit of the vehicle for high-voltage power-on.

The electric power control method for vehicle battery swapping as provided may further comprise: confirming, before the vehicle with a battery to be swapped stops supplying power to the high-voltage demand devices in the vehicle, whether the vehicle with a battery to be swapped is the one provided in battery swap reservation information, and continuing subsequent operations only when confirming that it is.

In the electric power control method for vehicle battery swapping as provided, confirming whether the vehicle with a battery to be swapped is the one provided in battery swap reservation information comprises the following steps: acquiring, from the vehicle with a battery to be swapped, preset identification information which is vehicle identification needing to be provided during battery swap reservation; and matching the identification information acquired from the vehicle with a battery to be swapped with vehicle identification in the reservation information, and if the matching succeeds, confirming that the vehicle with a battery to be swapped is the vehicle provided in the reservation information.

The electric power control method for vehicle battery swapping as provided may further comprise: collecting traction battery information of the vehicle with a battery to be swapped before the vehicle with a battery to be swapped stops supplying power to the high-voltage demand devices in the vehicle, and matching the collected traction battery information with traction battery information of a battery that is planned to be swapped onto the vehicle, and performing subsequent steps only if the matching succeeds.

In the electric power control method for vehicle battery swapping as provided, the traction battery information comprises an SOC and an SOH of a battery, and software version and hardware version information related to the traction battery.

The electric power control method for vehicle battery swapping as provided may further comprise: confirming, after the battery swap operation is performed and the completion of battery swap is determined, whether battery information of a new battery that is swapped is consistent with battery information of a battery that is planned to be swapped onto the vehicle by a battery swap station. The battery information comprises any one or any combination of a battery pack number, and a battery management unit (BMS) number, a software number, a hardware number, an SOC, and an SOH of the battery.

The electric power control method for vehicle battery swapping as provided may further comprise: performing self-detection on a new battery that is swapped, after the battery swap operation is performed and the completion of battery swap is determined, wherein during the self-detection, a controller of the vehicle with a battery to be swapped that is related to traction battery control is put into a test mode in which it is temporarily allowed to turn on the high-voltage power supply of the vehicle to test whether the power-on and power-off of the traction battery are normal, and if the test of power-on and power-off of the traction battery passes, the high-voltage power supply of the vehicle is prohibited again from being turned on, so as to return to the safety mode.

The electric power control method for vehicle battery swapping as provided may further comprise: causing, after the self-detection succeeds, the vehicle to exit the safety mode and/or turning on the function of high-voltage power supply of the vehicle.

The invention further provides an electric power control system for vehicle battery swapping, which may comprise: a first controller associated with a battery swap station, which sends, to a vehicle with a battery to be swapped, a high-voltage turn-off signal for turning off high voltages; and a second controller provided in the vehicle, which receives the high-voltage turn-off signal and accordingly controls a traction battery of the vehicle to supply power to high-voltage demand devices in the vehicle, and causes the vehicle to enter a safety mode in which high-voltage power supply of the vehicle is prohibited from being turned on, in order to perform a subsequent battery swap operation In the electric power control system for vehicle battery swapping, the first controller is configured to send, to the vehicle with a battery to be swapped, the high-voltage turn-off signal for turning off high voltages; determine whether the vehicle with a battery to be swapped is at a battery swap platform; and send the high-voltage turn-off signal when determining that the vehicle with a battery to be swapped is at the battery swap platform.

In the electric power control system for vehicle battery swapping, the second controller is configured to confirm, before controlling the traction battery of the vehicle to supply power to the high-voltage demand devices in the vehicle, whether the vehicle with a battery to be swapped has been locked, and to control the traction battery of the vehicle to supply power to the high-voltage demand devices in the vehicle only when the vehicle has been locked.

In the electric power control system for vehicle battery swapping, the second controller is further configured to cause, before the battery swap device performs the battery swap operation, a communication network of the vehicle with a battery to be swapped to enter a sleep mode.

In the electric power control system for vehicle battery swapping, the first controller and the second controller are respectively configured such that: before sending the high-voltage turn-off signal, the second controller interacts with the first controller to determine whether the vehicle with a battery to be swapped meets a preset condition for battery swapping, wherein the preset condition at least comprises a small-battery charge level of the vehicle with a battery to be swapped being sufficient to support the operation of each low-voltage electric control unit in the vehicle during the process of battery swapping.

In the electric power control system for vehicle battery swapping, the second controller is configured to turn off a remote high-voltage power-on function and/or a remote software upgrade function of the vehicle before controlling the traction battery of the vehicle to supply power to the high-voltage demand devices in the vehicle.

In the electric power control system for vehicle battery swapping, the second controller is further configured to turn off any one or a combination of the following functions of the vehicle before the vehicle with a battery to be swapped stops supplying power to the high-voltage demand devices in the vehicle: a creep torque of the vehicle, a low-small-battery-charge-level wake-up charging function, and a request from an ECU of the vehicle for high-voltage power-on.

In the electric power control system for vehicle battery swapping, the first controller is further configured to confirm, before the second controller controls the traction battery of the vehicle to stop supplying power to the high-voltage demand devices in the vehicle, whether the vehicle with a battery to be swapped is the one provided in battery swap reservation information, and to issue a swap-not-allowed signal when confirming that it is not.

In the electric power control system for vehicle battery swapping, the first controller and the second controller are configured such that before the second controller controls the traction battery of the vehicle to stop supplying power to the high-voltage demand devices in the vehicle, the first controller interacts with the second controller to cause the latter to collect traction battery information of the vehicle with a battery to be swapped and send the collected traction battery information to the first controller, so that the first controller matches the collected traction battery information with traction battery information of a battery that is planned to be swapped onto the vehicle and issues a mismatch signal if the matching does not succeed.

In the electric power control system for vehicle battery swapping, the second controller confirms, after the battery swap operation is performed and the completion of battery swap is determined, whether battery information of a new battery that is swapped is consistent with battery information of a battery that is planned to be swapped onto the vehicle by a battery swap station.

The electric power control system for vehicle battery swapping further comprises a self-detection system which is configured to perform self-detection on a new battery that is swapped, after the battery swap operation is performed and the completion of battery swap is determined, wherein during the self-detection, the controller of the vehicle with a battery to be swapped that is related to traction battery control is put into a test mode in which it is temporarily allowed to turn on the high-voltage power supply of the vehicle to test whether the power-on and power-off of the traction battery that is swapped onto the vehicle are normal, and if the test of power-on and power-off of the traction battery passes, the high-voltage power supply of the vehicle is prohibited again from being turned on, so as to return to the safety mode.

In the electric power control system for vehicle battery swapping, the self-detection system is configured to cause, after the self-detection succeeds, the vehicle to exit the safety mode and/or turn on the function of high-voltage power supply of the vehicle.

The method mentioned above can be implemented by software, and some steps or processes can be implemented as different software modules, which are provided in different hardware. For example, some steps are implemented as a control module which is implemented at the battery swap station side, while some are implemented in a vehicle, and some may be in a third terminal, which is, for example, the terminal of the person responsible for battery swap, etc. No matter where the software module is implemented, it may be implemented as an application APP.

### Brief Description of the Drawings

The above-mentioned and other objectives and advantages of the invention will be more thorough and clearer from the following detailed description in conjunction with the drawings, wherein the same or similar elements are represented by the same numerals.
FIG. 1 is a flowchart of an electric power control method for vehicle battery swapping according to an example of the invention.
FIG. 2 is a schematic structural diagram of an electric power control system for vehicle battery swapping according to an example of the invention.
FIG. 3 exemplarily illustrates a process diagram of an electric power control method for vehicle battery swapping according to a specific example of the invention.

### Detailed Description of Embodiments

The invention will be more completely described with reference to the accompanying drawings. Exemplary embodiments of the invention are shown in the accompanying drawings. However, the invention may be implemented in many different forms and should not be construed as being limited to the embodiments set forth herein. On the contrary, these embodiments are provided to make the disclosure thorough and complete and fully pass on the concept of the invention to those skilled in the art. In the accompanying drawings, the same numerals indicate the same elements or components, and the description thereof will thus be omitted.

Some block diagrams shown in the accompanying drawings are functional entities that do not necessarily correspond to physically or logically independent entities. These functional entities may be implemented as software, one or more hardware modules or integrated circuits, or different networks and/or processor apparatuses and/or micro-controller apparatuses.

The invention is described below with reference to flowchart illustrations, block diagrams and/or flowcharts of methods and apparatuses according to the embodiments of the invention. It should be understood that each block of the flowchart illustrations and/or the block diagrams and combinations of the flowchart illustrations and/or the block diagrams may be implemented by computer program instructions. These computer program instructions may be provided to a processor of a general-purpose computer, a special-purpose computer or other programmable data processing devices to form a machine, such that the instructions, which are executed by the processor of the computer or the other programmable data processing devices, create components for implementing functions/operations specified in the flowcharts and/or blocks and/or one or more flow block diagrams.

These computer program instructions may be stored in a computer-readable memory and may instruct a computer or other programmable processors to implement functions in a specific manner, so that these instructions stored in the computer-readable memory constitute an article of manufacture, which contains instruction components for implementing the functions/operations specified in one or more blocks of the flowcharts and/or block diagrams.

These computer program instructions may be loaded onto a computer or other programmable data processors to enable a series of operational steps to be executed on the computer or the other programmable processors, so as to constitute a computer-implemented process, so that these instructions executed on the computer or the other programmable data processors provide steps for implementing the functions or operations specified in one or more blocks of the flowcharts and/or block diagrams. It should also be noted that in some alternative implementations, the functions/operations shown in the blocks may occur in an order different from that shown in the flowchart. For example, two blocks shown in sequence may actually be executed substantially simultaneously or may sometimes be executed in a reverse order, which depends on the functions/operations involved.

In the examples of the invention, vehicle battery swap or battery swap refers to swapping the traction battery (i.e., a battery that outputs power to the vehicle) of a vehicle. In the examples of the invention, a vehicle with a battery to be swapped refers to a vehicle of which the traction battery is to be swapped. In the examples of the invention, for the consistency of the context description, although the vehicle has already swapped the battery and is no longer a vehicle with a battery to be swapped, but for the consistency of the context, it is still called vehicle with a battery to be swapped.

The vehicle is a pure electric vehicle in this example, but the solutions of the invention are applicable to a hybrid vehicle.

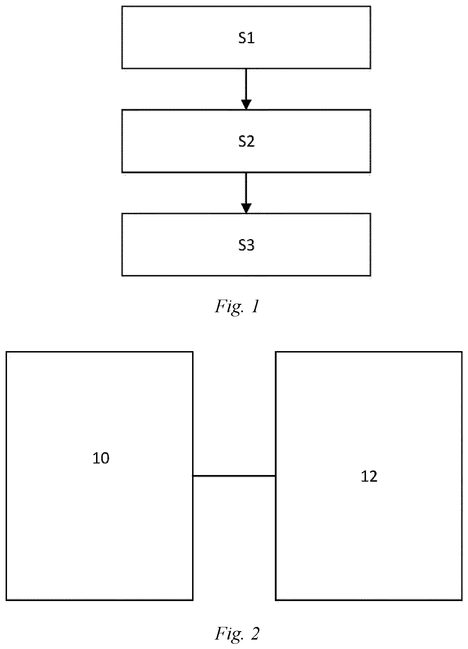

FIG. 1 is a flowchart of an electric power control method according to an example of the invention. This method is mainly used in the process of swapping the traction battery in the vehicle. The method comprises:
S 1, sending, to a vehicle with a battery to be swapped, a high-voltage turn-off signal for turning off high voltages;
S2, stopping, by the vehicle with a battery to be swapped once receiving the high-voltage turn-off signal, supplying power to high-voltage demand devices in the vehicle, and causing the vehicle to enter a safety mode in which high-voltage power supply of the vehicle is prohibited from being turned on (including two forms of remote and local turn-on);
S3, performing a battery swap operation after the vehicle enters the safety mode.

As an example, this high-voltage turn-off signal is sent to the vehicle by a battery swap station. The high-voltage turn-off signal will cause the vehicle to stop supplying power to all high-voltage demand devices in the vehicle, such as an air conditioner. Under normal circumstances, there will also be a signal for turning off high voltages after people lock the car or lock the vehicle (i.e., pulling out the car key and getting away), but this signal for turning off high voltages usually leaves some time redundancy for certain components, so that these components still have some buffering time after receiving this signal for turning off high voltages instead of immediately turning off high voltages. For example, power supply to the air conditioner that was originally turned on will not stop immediately after the car is locked, but will buffer for a while. The turn-off of high-voltage to enter the safety mode mentioned here in the application does not provide such time redundancy.

As an example, step S1 occurs after it is determined that the vehicle with a battery to be swapped is at a battery swap platform. At the battery swap platform, the vehicle is operated to swap the battery, that is, to swap the traction battery.

According to some examples of the invention, the electric power control method for vehicle battery swapping further comprises: confirming, before the vehicle with a battery to be swapped stops supplying power to the high-voltage demand devices in the vehicle, whether the vehicle with a battery to be swapped has been locked, and stopping supplying power to the high-voltage demand devices in the vehicle only when the vehicle has been locked.

According to some examples of the invention, the electric power control method for vehicle battery swapping further comprises: confirming, before performing the battery swap operation, that a communication network of the vehicle with a battery to be swapped enters a sleep mode. The communication network is put into the sleep mode in order to prevent the vehicle from being woken up by the signal transmitted through the network during the process of battery swapping, and also to avoid the software upgrade initiated through the network.

According to some examples of the invention, the electric power control method for vehicle battery swapping further comprises: determining, before step S1, whether the vehicle with a battery to be swapped meets a preset condition for battery swapping, wherein the preset condition at least comprises a small-battery charge level of the vehicle with a battery to be swapped meeting the battery swap condition sufficient to support the operating of each low-voltage electric control unit in the vehicle during the process of battery swapping. A small battery is a battery in an electric vehicle that supplies power to low-voltage devices after the traction battery of the vehicle stops supplying power. Generally, when the traction battery is working, the electric power of the traction battery is supplied to the low-voltage devices in the vehicle after being converted by a DCDC converter (a direct-current to direct-current converter), and usually only after the traction battery is turned off, the small battery is used to supply power to the low-voltage devices. Moreover, generally, when the traction battery supplies power, the small battery will receive, from an output end of the DCDC converter, low-voltage electric power for charging.

According to some examples of the invention, the electric power control method for vehicle battery swapping further comprises: turning off a remote high-voltage power-on function and/or a remote software upgrade function of the vehicle before the vehicle with a battery to be swapped stops supplying power to the high-voltage demand devices in the vehicle. This can be achieved, for example, by turning off an onboard communication module.

According to some examples of the invention, the electric power control method for vehicle battery swapping further comprises: turning off any one or a combination of the following functions of the vehicle before the vehicle with a battery to be swapped stops supplying power to the high-voltage demand devices in the vehicle: a creep torque of the vehicle, a low-small-battery-charge-level wake-up charging function, and a request from an ECU of the vehicle for high-voltage power-on.

According to some examples of the invention, the electric power control method for vehicle battery swapping further comprises: confirming, before the vehicle with a battery to be swapped stops supplying power to the high-voltage demand devices in the vehicle, whether the vehicle with a battery to be swapped is the one provided in battery swap reservation information, and continuing subsequent operations only when confirming that it is.

According to some examples of the invention, in the electric power control method for vehicle battery swapping as provided, confirming whether the vehicle with a battery to be swapped is the one provided in battery swap reservation information comprises the following steps: acquiring, from the vehicle with a battery to be swapped, preset identification information which is vehicle identification needing to be provided during battery swap reservation; and matching the identification information acquired from the vehicle with a battery to be swapped with vehicle identification in the reservation information, and if the matching succeeds, confirming that the vehicle with a battery to be swapped is the vehicle provided in the reservation information.

According to some examples of the invention, the electric power control method for vehicle battery swapping further comprises: collecting battery information about the traction battery of the vehicle with a battery to be swapped before the vehicle with a battery to be swapped stops supplying power to the high-voltage demand devices in the vehicle, and matching the collected traction battery information with traction battery information of a battery that is planned to be swapped onto the vehicle, and performing subsequent steps only if the matching succeeds.

According to some examples of the invention, in the electric power control method for vehicle battery swapping, the traction battery information comprises a state of charge (SOC) and a state of health (SOH) of a battery, and software version and hardware version information related to the traction battery.

According to some examples of the invention, the electric power control method for vehicle battery swapping further comprises: confirming, after the battery swap operation is performed and the completion of battery swap is determined, whether battery information of a new traction battery that is swapped onto the vehicle is consistent with battery information of a battery that is planned to be swapped onto the vehicle by a battery swap station.

According to some examples of the invention, in the electric power control method for vehicle battery swapping, the mentioned battery information may comprise any one or any combination of a battery pack number, and a battery management unit (BMS) number (if any), a software number, a hardware number, an SOC, and an SOH of the battery.

According to some examples of the invention, the electric power control method for vehicle battery swapping further comprises: after the battery swap operation is performed and the completion of battery swap is determined, performing self-detection on the new battery that is swapped. During the self-detection, the controller in the vehicle with a battery to be swapped (it should be understood that the traction battery has already been swapped for the vehicle at this moment) that is related to traction battery control is put into a test mode in which it is temporarily allowed to turn on the high-voltage power supply of the vehicle to test whether the power-on and power-off of the traction battery are normal, and if the test of power-on and power-off of the traction battery passes, a high-voltage power supply prohibition function of the vehicle is turned on again, so as to return to the safety mode.

According to some examples of the invention, the electric power control method for vehicle battery swapping further comprises: causing, after the self-detection succeeds, the vehicle to exit the safety mode and/or turning on the function of high-voltage power supply of the vehicle.

In the examples above, the steps/processes can be combined with each other according to situations, and during execution, the steps and processes can be exchanged without departing from and affecting the battery swap operation.

According to the invention, an electric power control system for vehicle battery swapping is further provided, which comprises: a first controller 10 associated with a battery swap station, which sends, to a vehicle with a battery to be swapped, a high-voltage turn-off signal for turning off high voltages; and a second controller 12 provided in the vehicle, which receives the high-voltage turn-off signal and accordingly controls a traction battery of the vehicle to supply power to high-voltage demand devices in the vehicle, and causes the vehicle to enter a safety mode in which high-voltage power supply of the vehicle is prohibited from being turned on. After the vehicle enters the safety mode, there will be a battery swap device to perform a battery swap operation. The first controller associated with the battery swap station may be provided in a control server of the battery swap station, or may be an independent control device separate from the control server. FIG. 2 is a schematic structural diagram of the electric power control system.

In the electric power control system for vehicle battery swapping according to the invention, the first controller 10 is configured to send, to the vehicle with a battery to be swapped, the high-voltage turn-off signal for turning off high voltages, determine whether the vehicle with a battery to be swapped is at a battery swap platform, and send the high-voltage turn-off signal when determining that the vehicle with a battery to be swapped is at the battery swap platform.

In the electric power control system for vehicle battery swapping according to the invention, exemplarily, the second controller 12 is configured to confirm, before controlling the traction battery of the vehicle to stop supplying power to the high-voltage demand devices in the vehicle, whether the vehicle with a battery to be swapped has been locked, and to cause the traction battery of the vehicle to stop supplying power to the high-voltage demand devices in the vehicle only when the vehicle has been locked. In some more specific examples below, the second controller 12 may be a vehicle control unit (VCU), or a control module implemented in the vcu.

In the electric power control system for vehicle battery swapping according to the invention, exemplarily, the second controller 12 is further configured to cause, before the battery swap device performs the battery swap operation, a communication network of the vehicle with a battery to be swapped to enter a sleep mode. As stated above, in this way, the communication network is put into the sleep mode in order to prevent the vehicle from being woken up by the signal transmitted through the network during the process of battery swapping, and also to avoid the software upgrade initiated through the network.

In the electric power control system for vehicle battery swapping according to the invention, exemplarily, the first controller 10 and the second controller 12 are respectively configured such that: before sending the high-voltage turn-off signal, the second controller 12 interacts with the first controller 10 to determine whether the vehicle with a battery to be swapped meets a preset condition for battery swapping, wherein the preset condition at least comprises a small-battery charge level of the vehicle with a battery to be swapped meeting the battery swap condition, that is, it is sufficient to support the operation of each low-voltage electric control unit in the vehicle during the process of battery swapping.

In the electric power control system for vehicle battery swapping according to the invention, exemplarily, the second controller 12 is configured to turn off a remote high-voltage power-on function and/or a remote software upgrade function of the vehicle before controlling the traction battery of the vehicle to supply power to the high-voltage demand devices in the vehicle.

In the electric power control system for vehicle battery swapping according to the invention, exemplarily, the second controller 12 is further configured to turn off any one or a combination of the following functions of the vehicle before the vehicle with a battery to be swapped stops supplying power to the high-voltage demand devices in the vehicle: a creep torque of the vehicle, a low-small-battery-charge-level wake-up charging function, and a request from an ECU of the vehicle for high-voltage power-on.

In the electric power control system for vehicle battery swapping according to the invention, exemplarily, the first controller 10 is further configured to confirm, before the second controller 12 controls the traction battery of the vehicle to stop supplying power to the high-voltage demand devices in the vehicle, whether the vehicle with a battery to be swapped is the one provided in battery swap reservation information, and to issue a swap-not-allowed signal when confirming that it is not.

In the electric power control system for vehicle battery swapping according to the invention, exemplarily, the first controller 10 and the second controller 12 are configured such that: before the second controller controls the traction battery of the vehicle to stop supplying power to the high-voltage demand devices in the vehicle, the first controller interacts with the second controller to cause the latter to collect traction battery information of the vehicle with a battery to be swapped and send the collected traction battery information to the first controller, so that the first controller matches the collected traction battery information with traction battery information of a battery that is planned to be swapped onto the vehicle and issues a mismatch signal if the matching does not succeed.

In the electric power control system for vehicle battery swapping according to the invention, exemplarily, the second controller 12 is further configured to confirm, after the battery swap operation is performed and the completion of battery swap is determined, whether battery information of a new battery that is swapped is consistent with battery information of a battery that is planned to be swapped onto the vehicle by a battery swap station. It should be noted that confirming whether the battery information of the new battery that is swapped is consistent with the battery information of the battery that is planned to be swapped onto the vehicle by the battery swap station can also be performed by the first controller 10. Regardless of which controller performs the confirmation, it is only necessary to transfer, to this controller, the battery information of the new battery that is confirmed to be swapped and the battery information of the battery that is planned to be swapped onto the vehicle by the battery swap station.

The electric power control system for vehicle battery swapping according to the invention exemplarily further comprises a self-detection system (not shown) which is configured to perform self-detection on a new battery that is swapped, after the battery swap operation is performed and the completion of battery swap is determined, wherein during the self-detection, the controller of the vehicle with a battery to be swapped that is related to traction battery control is put into a test mode in which it is temporarily allowed to turn on the high-voltage power supply of the vehicle to test whether the power-on and power-off of the traction battery are normal, and if the test of power-on and power-off of the traction battery passes, the high-voltage power supply of the vehicle is prohibited again from being turned on, so as to return to the safety mode. It should be noted that, by way of example and not limitation, the self-detection system can be implemented in the vehicle's original battery management system (BMS).

In the electric power control system for vehicle battery swapping according to the invention, exemplarily, the self-detection system is configured to cause, after the self-detection succeeds, the vehicle to exit the safety mode and/or turn on the function of high-voltage power supply of the vehicle.

In the above examples of the electric power control system for vehicle battery swapping, the components and elements in the examples can be combined with each other.

In the examples of the application, the battery swap platform and the battery swap device will be mentioned because of the need, but the focus of the application is on the electric power system management implemented due to battery swap, which involves the high-voltage power of the vehicle and the confirmation of information before and after the swap of the traction battery, and does not specifically involve the mechanical equipment for swapping the traction battery. Therefore, no more description is given to the battery swap platform and the battery swap device.

Moreover, the electric power control method for vehicle battery swapping described above can be implemented in the electric power control system for vehicle battery swapping. In each of the examples, the method is performed at the vehicle side, and is executed by a controller for managing battery swap at the vehicle side, for example, by the second controller described above in conjunction with FIG. 2. At the battery swap station side, the control components at the battery swap station may be involved.

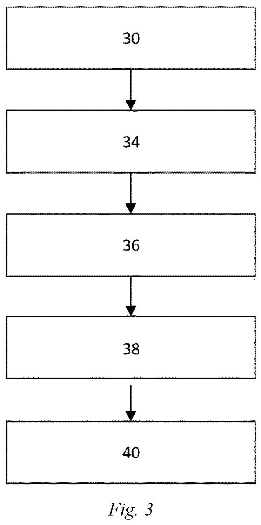

In the above description of the examples, the determination of whether the vehicle is in the battery swap reservation information is mentioned. Hereinafter, the process of the electric power control method for vehicle battery swap will be described by way of example and not limitation in conjunction with FIG. 3.

Referring to FIG. 3, in step 30, the battery swap station authenticates the vehicle entering the battery swap station to determine whether this vehicle is a vehicle making a battery swap reservation. Exemplarily, the user has reserved battery swap through a mobile phone APP, and after entering the battery swap station, the user is authenticated according to the relevant reservation information. After the authentication of the vehicle passes and the vehicle is confirmed to be a vehicle with a battery to be swapped, it enters into the preparation for battery swap, otherwise, the battery swap station will not perform the operation of swapping the battery for the vehicle. It should be understood that the execution of this step usually requires communication between the battery swap station and the vehicle.

In step 34: the vehicle enters into the preparation for battery swap during which it is first confirmed whether the vehicle has entered the battery swap platform and whether the vehicle has been locked, etc.; and if the confirmation result is yes, for example, a VCU (which can also be another controller that only needs to be able to perform this function) issues a high-voltage turn-off signal for stopping high-voltage turn-off, so as to turn off the high-voltage power supply.

After the high-voltage power supply is turned off in step 34, the VCU notifies a controller for managing battery swap at the vehicle side, that the preparation for battery swap is completed. As an alternative, after the high-voltage power supply is turned off in step 34, the controller for managing battery swap at the vehicle side can independently check, after a preset time, whether the high voltage has been turned off. It should be noted that the controller for managing battery swap at the vehicle side may be a separate controller or may be implemented as a part of the VCU.

In step 36: after the preparation for battery swap is completed, the vehicle side will send a signal to the battery swap station to notify same to start a battery swap operation.

In step 38: after the vehicle side receives a signal indicating the completion of battery swap from the battery swap station side, it is determined whether the battery swapped is a battery that matches this vehicle, for example, by means of detection performed by a battery management system (BMS).

In step 40, if it is detected that the matching is confirmed in step 38, the process enters self-detection, and if the self-detection is unsuccessful, the high voltage will not be turned on and the battery swap station will also be notified of an abnormal self-detection.

Hereinafter, the application will be illustrated with more specific examples. In the specific examples below, some words/terms or names may be different from those described above, but they can be understood as equivalent to the above components/steps or their specific implementation as long as the function of their implementation or purpose of their application is substantially the same as or similar to some of the above components/steps.

In the electric power control method for vehicle battery swapping provided according to the invention, according to the interaction between the battery swap station and the vehicle during the process of battery swapping, the process of battery swapping can be divided into a total of 7 parts: entering battery swap mode, confirmation of vehicle information, preparation for battery swap, swap of traction battery, confirmation of information about new battery, power-on self-detection on new battery, and exiting battery swap mode.

### Entering battery swap mode

In this specific example, that the vehicle enters the battery swap mode, which is based on the establishment of a communication connection between the vehicle and the battery swap station, and the confirmation that the vehicle has the preset condition for battery swapping. For example, the charge level of a 12 V small battery is sufficient to support the operation of each low-voltage electric control unit during the process of battery swapping. In other words, the charge level of the 12 V small battery is sufficient for supporting operations until the end of battery swap. If the preset condition for battery swap device is not met, for example, the small-battery charge level is not sufficient, it may be necessary to charge the small battery, etc.

By way of example and not limitation, for the driver (the user, or the person who helps the user with the battery swap) of the vehicle with a battery to be swapped, the above process, such as battery swap reservation, waiting for battery swap detection, and confirming whether battery swap can be performed and other information, can be performed by means of a console screen of the vehicle, or a mobile device such as a mobile phone. For example, if the result of the detection indicates that the vehicle does not meet the preset condition for battery swap, the driver is notified of this information through the console screen of the vehicle or a battery swap APP on the mobile phone.

After entering the battery swap mode, the high-voltage power supply will be stopped. This comprises prohibiting a remote high-voltage power-on request (for example, starting the vehicle remotely), and will also turn off the remote software upgrade function.

After entering the battery swap mode, the VCU will turn off the creep torque (so as to achieve the effect of neutral without stepping on the accelerator), turn off the low-small-battery-charge-level wake-up charging function, and turn off requests from other electric control units for high-voltage power-on. In some descriptions, the above situation is also referred to as the VCU entering a pre-safety mode.

### Confirmation of vehicle information

After entering the battery swap mode, there will be further communication and interaction between the battery swap station and the vehicle to confirm that the vehicle with a battery to be swapped is the correct vehicle. For example, the battery swap station will send a request to the vehicle to acquire vehicle information. Then, the vehicle will provide the vehicle's VIN (vehicle ID number), an SOC of the traction battery, an SOH of the traction battery, and software and hardware version information of some important electric control units (for example: a vehicle control unit (VCU), and a battery management system (BMS)) to the battery swap station. The battery swap station will confirm accordingly whether the vehicle is consistent with a predetermined vehicle with a battery to be swapped, and whether a new battery to be swapped onto the vehicle is compatible with the existing battery in the vehicle. If not compatible, the battery swap station will notify the driver of battery swap and stop the subsequent process of battery swap.

### Preparation for battery swap

After the vehicle arrives at the battery swap platform and requests to start battery swapping, the battery swap station communicates with the vehicle to confirm whether the battery can be swapped for the vehicle. In practical applications, it can be determined whether the vehicle is in a parking state and whether the steering wheel is turned back (to make sure that the battery is positioned in place, because if the tire is not in the correct position, the robot arm cannot be aligned with the screws). If the conditions are met, the vehicle is requested to be locked (to be locked in order to enter an anti-theft state). If the locking is successful, the VCU is requested to power off the high voltage, that is, to disconnect the high voltage. Once the VCU successfully powers off the high voltage (once the power-off of high voltage is successful, the vehicle enters a safety mode), the vehicle side detects, within a certain time period, whether the network enters a sleep mode. If the vehicle enters the sleep mode, the vehicle side informs the battery swap station side that the preparation for battery swap is completed and the battery swap can be performed, otherwise, it feeds back to the battery swap station that battery swap cannot be performed.

### Swap of traction battery

The battery swap station uses physical equipment to swap the vehicle's traction battery.

### Confirmation of information about new battery

After the battery swap ends, the battery swap station will communicate with the vehicle side, so that the vehicle side knows that the battery swap is completed. The vehicle side will confirm the information about the new battery. For example, the vehicle side will collect a battery pack number of the new battery, and a battery management unit (BMS) number, a software number, a hardware number, an SOC, and an SOH of the new battery. If the collected information about the newly installed battery is inconsistent with the expectation of the battery swap station (this may be because a wrong battery is taken by the battery swap station), then prompt information will be issued to re-swap the battery.

### Power-on self-detection on new battery

After it is confirmed that the new battery swapped onto the vehicle is the correct new battery, self-detection will be performed on the new traction battery, for example, self-detection will be performed on the new traction battery by the VCU.

During the self-detection of the new traction battery, the VCU will be in a test mode. The test mode temporarily allows the high voltage power-on to test whether the power-on and power-off of the traction battery are normal. When the test is over, it will return to the safety mode, so that even if the self-detection fails and the battery is re-swapped, the vehicle is still in the safety mode, thus ensuring safety.

### Exiting battery swap mode

After it is confirmed that the self-detection of the new battery succeeds, the VCU of the vehicle exits the safety mode, and in some cases, it can exit to the pre-safety mode described above, turn off the safety connection, and unlock the vehicle to facilitate the driver to enter the vehicle, thereby reducing unlocking operations.

If the VCU fails to exit the safety mode, the vehicle side will send information indicating that it fails to exit the safety mode to the battery swap station.

When the battery swap is completed, after the vehicle leaves the battery swap station, the main control module which controls battery swap at the vehicle side will exit the battery swap mode, and the VCU will return to the normal driving mode. In some embodiments, the controller which controls battery swap at the vehicle side can confirm the exiting from the battery swap mode according to the vehicle's disconnection of wifi signals in the battery swap station. In still other embodiments, the battery swap mode may be manually exited.

In the above-described process of entering battery swap mode, confirmation of vehicle information, preparation for battery swap, swap of traction battery, confirmation of information about new battery, and power-on self-detection on new battery, the entire execution process involves communication between the battery swap station and the vehicle. In a possible implementation, a controller for swapping a traction battery is provided in the battery swap station, and a controller for performing the entire process described above is provided in the vehicle. The controller in the vehicle can be provided separately, or it can be implemented in an original controller of the vehicle, such as in the VCU. No matter which way of implementation, this controller can communicate with the VCU of the vehicle and other associated electric control units to acquire information.

It should be noted that, in some alternative implementations, the functions/operations shown in the blocks may occur in an order different from that shown in the flowchart. For example, two blocks shown in sequence may actually be executed substantially simultaneously or may sometimes be executed in a reverse order, which depends on the functions/operations involved. Although a specific sequence of steps is shown, disclosed, and required, it should be understood that the steps can be implemented, separated, or combined in any order, unless otherwise indicated, and will still benefit from this disclosure.

This specification uses examples to disclose the invention, including the best mode, and also to enable any person skilled in the art to practice the invention, including making and using any apparatus or system and performing any of the incorporated methods. The scope of protection of the invention is defined by the claims, and may include other examples conceived by those skilled in the art. Such other instances are intended to be within the scope of the claims if they have structural elements that do not differ from the literal language of the claims, or if they include equivalent structural elements with insubstantial differences from the literal language of the claims.

## Claims

1. An electric power control method for vehicle battery swapping, the method comprising:
S1, sending, to a vehicle with a battery to be swapped, a high-voltage turn-off signal for turning off high voltages;
S2, stopping, by the vehicle with a battery to be swapped once receiving the high-voltage turn-off signal, supplying power to high-voltage demand devices in the vehicle, and causing the vehicle to enter a safety mode in which high-voltage power supply of the vehicle is prohibited from being turned on; and
S3, performing a battery swap operation after the vehicle enters the safety mode.

2. The method of claim 1, wherein step S1 occurs after it is determined that the vehicle with a battery to be swapped is at a battery swap platform.

3. The method of claim 2, further comprising: confirming, before the vehicle with a battery to be swapped stops supplying power to the high-voltage demand devices in the vehicle, whether the vehicle with a battery to be swapped has been locked, and stopping supplying power to the high-voltage demand devices in the vehicle only when the vehicle has been locked.

4. The method of claim 1, further comprising: confirming, before performing the battery swap operation, that a communication network of the vehicle with a battery to be swapped enters a sleep mode.

5. The method of claim 1, further comprising: determining, before step S1, whether the vehicle with a battery to be swapped meets a preset condition for battery swapping, wherein the preset condition at least comprises a small-battery charge level of the vehicle with a battery to be swapped being sufficient to support the operation of each low-voltage electric control unit in the vehicle during the process of battery swapping.

6. The method of claim 1, further comprising: turning off a remote high-voltage power-on function and/or a remote software upgrade function of the vehicle before the vehicle with a battery to be swapped stops supplying power to the high-voltage demand devices in the vehicle.

7. The method of claim 1, further comprising: turning off any one or a combination of the following functions of the vehicle before the vehicle with a battery to be swapped stops supplying power to the high-voltage demand devices in the vehicle: a creep torque of the vehicle, a low-small-battery-charge-level wake-up charging function, and a request from an electric control unit (ECU) of the vehicle for high-voltage power-on.

8. The method of claim 1, further comprising: confirming, before the vehicle with a battery to be swapped stops supplying power to the high-voltage demand devices in the vehicle, whether the vehicle with a battery to be swapped is the one provided in battery swap reservation information.

9. The method of claim 8, wherein confirming whether the vehicle with a battery to be swapped is the one provided in battery swap reservation information comprises the following steps:
acquiring, from the vehicle with a battery to be swapped, preset identification information which is vehicle identification needing to be provided during battery swap reservation; and
matching the identification information acquired from the vehicle with a battery to be swapped with vehicle identification in the reservation information, and if the matching succeeds, confirming that the vehicle with a battery to be swapped is the vehicle provided in the reservation information.

10. The method of claim 1 or 8, further comprising: collecting traction battery information of the vehicle with a battery to be swapped before the vehicle with a battery to be swapped stops supplying power to the high-voltage demand devices in the vehicle, and matching the collected traction battery information with traction battery information of a battery that is planned to be swapped onto the vehicle, and performing subsequent steps only if the matching succeeds.

11. The method of claim 10, wherein the traction battery information comprises an SOC and an SOH of a battery, and software version and hardware version information related to the traction battery.

12. The method of claim 1, further comprising: determining, after the battery swap operation is performed and the completion of battery swap is confirmed, whether battery information of a new battery that is swapped is consistent with battery information of a battery that is planned to be swapped onto the vehicle by a battery swap station.

13. The method of claim 12, wherein the battery information comprises any one or any combination of a battery pack number, and a battery management unit (BMS) number, a software number, a hardware number, an SOC, and an SOH of the battery.

14. The method of claim 1, further comprising: performing self-detection on a new battery that is swapped, after the battery swap operation is performed and the completion of battery swap is determined, wherein during the self-detection, a controller of the vehicle related to traction battery control is put into a test mode in which it is temporarily allowed to turn on the high-voltage power supply of the vehicle to test whether the power-on and power-off of the traction battery are normal, and if the test of power-on and power-off of the traction battery passes, the high-voltage power supply of the vehicle is prohibited again from being turned on, so as to return to the safety mode.

15. The method of claim 14, further comprising: causing, after the self-detection succeeds, the vehicle to exit the safety mode and/or turning on the function of high-voltage power supply of the vehicle.

16. An electric power control system for vehicle battery swapping, comprising:
a first controller associated with a battery swap station, which sends, to a vehicle with a battery to be swapped, a high-voltage turn-off signal for turning off high voltages; and
a second controller provided in the vehicle, which receives the high-voltage turn-off signal and accordingly controls a traction battery of the vehicle to stop supplying power to high-voltage demand devices in the vehicle, so that the vehicle enters a safety mode in which high-voltage power supply of the vehicle is prohibited from being turned on, in order to perform a subsequent battery swap operation.

17. The system of claim 16, wherein the first controller is configured to send the high-voltage turn-off signal to the vehicle with a battery to be swapped when it is determined that the vehicle with a battery to be swapped is at a battery swap platform.

18. The system of claim 17, wherein the second controller is configured to confirm, before controlling the traction battery of the vehicle to supply power to the high-voltage demand devices in the vehicle, whether the vehicle with a battery to be swapped has been locked, and to control the traction battery of the vehicle to stop supplying power to the high-voltage demand devices in the vehicle only when the vehicle has been locked.

19. The system of claim 16, wherein the second controller is further configured to cause, before the battery swap operation is performed, a communication network of the vehicle with a battery to be swapped to enter a sleep mode.

20. The system of claim 16, wherein the first controller and the second controller are respectively configured such that:
before sending the high-voltage turn-off signal, the first controller interacts with the second controller to determine whether the vehicle with a battery to be swapped meets a preset condition for battery swapping, wherein the preset condition at least comprises a small-battery charge level of the vehicle with a battery to be swapped being sufficient to support the operation of each low-voltage electric control unit in the vehicle with a battery to be swapped during the process of battery swapping.

21. The system of claim 16, wherein the second controller is configured to turn off a remote high-voltage power-on function and/or a remote software upgrade function of the vehicle before controlling the traction battery of the vehicle to stop supplying power to the high-voltage demand devices in the vehicle.

22. The method according to claim 16, wherein the second controller is further configured to turn off any one or a combination of the following functions of the vehicle before the vehicle with a battery to be swapped stops supplying power to the high-voltage demand devices in the vehicle: a creep torque of the vehicle, a low-small-battery-charge-level wake-up charging function, and a request from an ECU of the vehicle for high-voltage power-on.

23. The system of claim 16, wherein the first controller is further configured to confirm, before the second controller controls the traction battery of the vehicle to stop supplying power to the high-voltage demand devices in the vehicle, whether the vehicle with a battery to be swapped is the one provided in battery swap reservation information, and to issue a warning signal when confirming that it is not.

24. The system of claim 16 or 23, wherein the first controller and the second controller are configured such that:
before the second controller controls the traction battery of the vehicle to stop supplying power to the high-voltage demand devices in the vehicle, the first controller interacts with the second controller to cause the latter to collect traction battery information of the vehicle with a battery to be swapped and send the collected traction battery information to the first controller, so that the first controller matches the collected traction battery information with traction battery information of a battery that is planned to be swapped onto the vehicle and issues a mismatch signal if the matching does not succeed.

25. The system of claim 16, wherein the second controller is configured to confirm, after the completion of battery swap is determined, whether battery information of a new battery that is swapped is consistent with battery information of a battery that is planned to be swapped onto the vehicle by a battery swap station.

26. The system of claim 16, further comprising a self-detection system which is configured to perform self-detection on a new battery that is swapped, after the battery swap operation is performed and the completion of battery swap is determined, wherein during the self-detection, the controller of the vehicle with a battery to be swapped that is related to traction battery control is put into a test mode in which it is temporarily allowed to turn on the high-voltage power supply of the vehicle to test whether the power-on and power-off of the traction battery are normal, and if the test of power-on and power-off of the traction battery passes, the high-voltage power supply of the vehicle is prohibited again from being turned on, so as to return to the safety mode.

27. The system of claim 26, wherein the self-detection system is configured to cause, after the self-detection succeeds, the vehicle to exit the safety mode and/or turn on the function of high-voltage power supply of the vehicle.
